# FASCICULE DE BREVET EUROPEEN

(11) **EP 0 550 323 B1**
(45) Date de publication et mention de la délivrance du brevet: **14.08.1996**
(21) Numéro de dépôt: 92403499.4
(22) Date de dépôt: 21.12.1992
(51) Int. Cl.: F16L 19/12

(54) **Dispositif de connexion pour composants d'un réseau de distribution de fluides, réseau et composants faisant application**
Verbindungsvorrichtung für Teile eines Fluid-Verteilungssystems, besagte Teile und System
Connector device for parts of fluid distribution artwork, said parts and said network

(30) Priorité: 26.12.1991 FR 9116173; 26.12.1991 FR 9116174
(43) Date de publication de la demande: 07.07.1993
(73) Titulaire: LEGRIS S.A., F-35000 Rennes (FR)
(72) Inventeur: Serot, Pierre, F-92260 Fontenay-aux-Roses (FR)
(74) Mandataire: Robert, Jean-Pierre

(56) Documents cités:
- AT-A- 387 081
- DE-U- 9 101 480
- GB-A- 2 117 072
- GB-A- 2 186 652

## Description

La présente invention concerne un dispositif de connexion entre un tronçon de canalisation et un composant fonctionnel ou de raccordement d'une installation de fluide sous pression, permettant la réalisation d'un réseau de distribution de fluide d'une manière simple, rapide, rationnelle et évolutive ou configurable en fonction de l'évolution des besoins de l'utilisateur.

La réalisation d'un réseau de distribution par exemple d'air comprimé dans une usine relève à l'heure actuelle, essentiellement de la plomberie, c'est-à-dire de la mise en place artisanale des canalisations formant ce réseau (découpe à longueur de tuyauteries, formage des tronçons sur le site en fonction des contraintes géométriques du lieu, brasage, soudage ou collage des éléments de raccordement ou de dérivation aux tronçons de tuyauterie). Dans certains cas, on utilise également des dispositifs d'accouplement de tronçons de tube par griffes comme illustrés par le document GB 2 117 072, qui permettent de gagner un peu de temps. La modification ou l'évolution d'une installation de ce type demande une reprise complète de celle-ci pour y insérer telle ou telle dérivation supplémentaire ou en supprimer telle autre. Même pour des évolutions mineures de l'installation telle par exemple que l'augmentation du diamètre d'une dérivation, par suite d'une demande accrue d'énergie sur cette ligne, il faut procéder à des aménagements lourds qui immobilisent longuement l'installation.

La présente invention entend remédier aux inconvénients des installations actuelles et de leur technique de pose en proposant principalement des moyens de connexion qui permettent un montage extrêmement rapide d'une installation nouvelle avec la possibilité de modifier aisément sa configuration, la nature ou l'emplacement des éléments fonctionnels qui la constituent.

En effet, la nature même des moyens de connexion propres à l'invention permet de diviser la ou les canalisations qui composent l'installation ou le réseau en éléments ou tronçons modulaires qu'il est aisé de remplacer ou modifier, ces tronçons étant fournis dans une série de longueurs prédéterminées et ne comportant aucun moyen d'extrémité spécifique pour leur raccordement à l'installation. Les moyens de raccordement sont concentrés dans un élément spécifique s'interposant entre l'extrémité d'un tronçon et un organe fonctionnel, cet organe fonctionnel pouvant être réduit à une union ou un bouchon.

Plus précisément l'invention a pour objet une ligne de distribution de Fluide sans pression comprenant au moins un tronçon de canalisation et au moins un élément fonctionnel ou de raccordement avec un embout, la liaison de l'embout au tronçon étant assurée par un dispositif qui comporte un manchon tubulaire divisé en deux parties axialement successives, la première partie étant équipée intérieurement des composants d'un raccord à connexion instantanée pour l'extrémité du tronçon de canalisation, la seconde partie comportant des moyens pour coiffer de manière étanche et démontable l'embout de raccordement dont la face d'extrémité constitue, lorsque l'embout est coiffé du manchon, une butée axiale de l'extrémité du tronçon engagée dans la première partie du manchon. Ce manchon regroupant les moyens de connexion présente de nombreux avantages. Le premier est qu'il peut être pré-monté sur les embouts de raccordement d'un organe. Chaque organe ainsi équipé est donc à connexion instantanée pour les tronçons de canalisation qui l'encadrent. Le second avantage est tel qu'en "décoiffant" chaque embout, on peut désolidariser un organe des tronçons qui l'encadrent et retirer cet organe sans déplacer les tronçons qui portent chacun un manchon tubulaire en attente d'un autre organe à "recoiffer" dans la mesure où il est interchangeable avec l'organe déposé. On réalise ainsi ce qui sera appelé ci-après une connexion instantanée éclissée autorisant une première connexion bout à bout d'éléments formant une ligne avec déconnexions et connexions ultérieures perpendiculairement à la ligne.

De manière préférée, les moyens pour coiffer l'embout comportent un taraudage de la seconde partie du manchon pour coopérer avec un filetage extérieur de l'embout.

On rappellera par ailleurs que les raccords dits à connexion instantanée sont connus depuis de nombreuses années. Ils consistent essentiellement, dans leur forme de réalisation les plus simples, en un élément tubulaire qui est rapporté par vissage dans l'orifice taraudé d'un organe tel qu'un distributeur, un vérin, une vanne.... et qui comporte, à l'intérieur, des moyens pour accueillir de manière étanche le tube et pour, une fois engagé, l'y retenir contre un effort tendant à l'en extraire. Ces moyens qui agrippent l'extrémité du tube à l'intérieur de cet élément tubulaire peuvent être de deux types. On citera la rondelle légèrement conique, pourvue de dents sur sa périphérie intérieure qui délimite un diamètre intérieur de passage inférieur au diamètre extérieur du tube de sorte que les dents viennent mordre sur ce tube. Le deuxième dispositif connu consiste en une sorte de douille tubulaire dont une extrémité est divisée en languettes longitudinales équipées à leur extrémité d'une dent tournée radialement vers l'intérieur, ces languettes coopérant avec une sorte de butée circonférentielle située à l'intérieur de l'embout tubulaire qui, lors d'un effort tendant à extraire le tube hors de cet élément tubulaire, contraint radialement les dents à mordre dans le tube. Dans ce deuxième type le passage libre entre les dents, la douille étant au repos, est également inférieur au diamètre extérieur du tube.

Ces dispositifs de connexion instantanée sont en général indémontables. Il est cependant apparu la nécessité de les rendre démontables, et ce de manière aussi rapide que possible, et pour cela on a créé des dispositifs plus complexes comportant des poussoirs tubulaires interposés entre les dents et le tube, permettant, en les déplaçant par rapport aux dents, le long du tube, d'écarter ces dents et de libérer le tube qui peut alors être extrait. L'action sur ces poussoirs est en général en sens contraire de la direction d'extraction du tube, si bien que la manipulation de ce type de raccords n'est pas toujours très aisée, notamment lorsque ceux-ci sont de petites dimensions.

On s'est en outre rendu compte qu'il pouvait être utile que les dents ou les griffes du dispositif de retenue axiale du tube dans l'élément tubulaire de connexion soient portées au contact de ce tube seulement après l'introduction de ce dernier dans l'élément tubulaire. En effet, lorsque les dents définissent au repos un diamètre de passage inférieur au diamètre extérieur du tube, l'introduction du tube provoque une rayure de cette extrémité qui peut nuire à la qualité de l'étanchéité, si le joint d'étanchéité est situé au-delà de ces dents dans le sens d'introduction du tube. Il peut être avantageux et simple de justement conserver cette position du joint sans pour autant souffrir des rayures.

Pour obtenir ce résultat supplémentaire dans l'invention, on a créé dans la première partie du manchon tubulaire, formant le dispositif de connexion susdit, un raccord instantané dont les composants comprennent des dents de retenue de l'extrémité du tronçon engagé dans la première partie qui sont solidaires d'un support déformable entre un premier état "de repos" dans lequel les dents de retenue sont disposées totalement à l'extérieur d'une circonférence égale à celle extérieure du tube à retenir et un second état, "en service" dans lequel les dents de retenue s'étendent au moins partiellement à l'intérieur de cette circonférence, tandis que des moyens de déformation du support sont prévus pour le faire passer de son premier à son second état et pour le maintenir dans ce second état.

On a ainsi réalisé un dispositif de retenue d'un tube qui peut être armé et désarmé et ce avant ou après l'introduction du tube dans l'embout de raccordement. Ainsi, selon les exigences, notamment en ce qui concerne l'étanchéité, de ce raccordement on peut armer le dispositif avant l'introduction du tube, celui-ci jouant alors le rôle d'un dispositif de connexion classique, ou introduire le tube puis armer le dispositif de sorte que les dents pénètrent dans la surface extérieure du tube après que celui-ci a été introduit, la déconnexion s'effectuant dans les deux cas en désarmant, c'est-à-dire en décontraignant l'organe support des dents de retenue pour que celles-ci, sous l'effet de la déformation élastique vers son état de repos du support de dents, se trouve placées à l'extérieur du tube, libérant ainsi ce dernier.

Plusieurs modes de réalisation de ces moyens sont possibles. Dans un premier mode de réalisation, le support est constitué par une rondelle équipée de dents intérieures contenues dans une surface sensiblement tronconique dont la grande base est rattachée à une couronne extérieure continue, qui est contenue dans une surface différente d'un plan radial, les moyens de déformation du support comportant deux surfaces radiales de pincement d'au moins la couronne extérieure de la rondelle, mobiles l'une par rapport à l'autre dans le sens axial à l'intérieur de l'embout, qui sont respectivement portées par un épaulement radial de la première partie du manchon tubulaire et par la face radiale d'une bague entretoise dont l'autre face est en appui sur la face d'extrémité de l'embout de raccordement.

C'est ainsi, en vissant ou dévissant, ou plus précisément en bloquant ou débloquant le manchon sur l'embout que l'on arme et désarme l'élément actif de la connexion instantanée.

Dans un autre mode de réalisation, le support est en forme de pince dont les bras sont orientés sensiblement axialement, les extrémités libres de ces bras formant les dents de retenue du tube, les moyens de déformation de la pince comprenant alors des surfaces de came coopérant avec la partie extérieure des dents pour les faire passer du premier au second état et les libérer pour qu'elles passent du fait de leur élasticité propre, du second état où les dents sont actives au premier état où elles sont inactives.

Les surfaces de came peuvent être commandées manuellement, soit par rotation d'une bague qui permet l'enfoncement des dents dans le tube soit par une poussée axiale d'une bague à surface conique qui également conduit à un enfoncement de ces dents.

D'autres caractéristiques et avantages de l'invention ressortiront des exemples de réalisation décrits ci-après.

Il sera fait référence aux dessins annexés parmi lesquels :
- la figure 1 est une vue en coupe axiale du dispositif de connexion de l'invention, avec les moyens de connexion instantanée dans leur état désarmé,
- la figure 2 est une vue en coupe axiale d'une variante de la figure 1, la connexion instantanée étant armée,
- la figure 3 est une vue en perspective d'une rondelle conforme à l'invention permettant d'être placée dans un état armé par rapport à un état de repos où elle est inactive,
- les figures 4 et 5 sont des vues en coupe orthogonale d'un second mode de réalisation de l'invention,
- la figure 6 illustre la réalisation d'une partie de réseau conforme à l'invention,
- les figures 7 et 8 représentent le démontage d'un organe fonctionnel,
- la figure 9 est une vue en coupe axiale d'un raccord union double avec purge d'eau conforme à l'invention,
- la figure 10 est une vue en coupe d'un organe fonctionnel de dérivation,
- la figure 11 est une vue d'un élément d'extrémité d'une ligne du réseau.

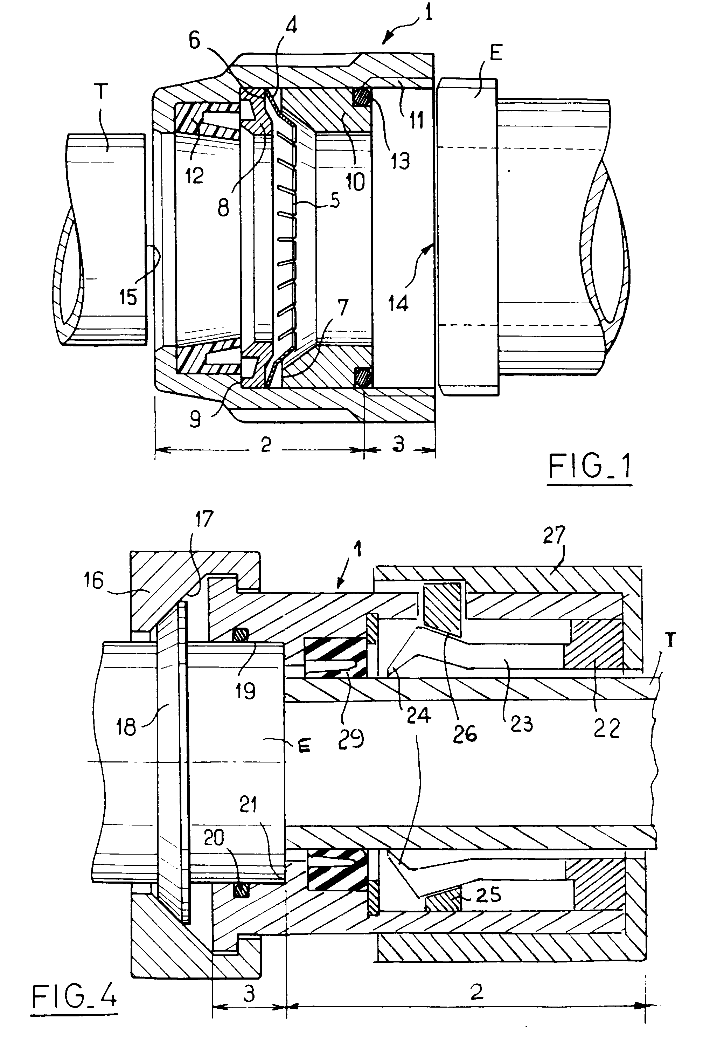

A la figure 1 on a représenté un premier mode de réalisation d'un dispositif de connexion destiné à assurer la liaison entre un tronçon de canalisation T et un embout de raccordement E appartenant à un appareil ou à un organe fonctionnel installé en ligne sur la canalisation. Ce dispositif de connexion est essentiellement constitué par un manchon tubulaire 1 divisé en deux parties axialement successives 2 et 3, la partie 2 étant équipée intérieurement de composants pour réaliser un raccord à connexion instantanée, la partie 3 étant destinée à coiffer, de manière démontable, l'embout E de l'appareil ou de l'organe à raccorder au tronçon T de canalisation.

Dans la cas de la figure 1, ces moyens de connexion instantanée consistent en une rondelle 4 métallique, de forme tronconique et possédant du côté de sa circonférence intérieure des dents 5 pour mordre la surface extérieure du tronçon de tube T et empêcher son retrait lorsque celui-ci est introduit dans la zone 2 du manchon 1. La rondelle 4 est élastiquement déformable entre une position représentée dans laquelle le diamètre intérieur de la rondelle 4 défini par les extrémités des dents 5, est supérieur au diamètre extérieur du tronçon T et une position dans laquelle la rondelle 4 est comprimée entre deux surfaces radiales 6, 7, dont l'effet est de modifier l'angle du tronc de cône et ainsi de placer les extrémités des dents 5 sur une circonférence plus petite que la circonférence du tronçon T.

La surface 6 appartient à une bague 8 qui prend appui sur un épaulement 9 intérieur de la partie 2 du manchon 1 tandis que la surface 7 appartient à une bague 10 qui est mobile axialement à l'intérieur de ce manchon, la compression de la rondelle 4 étant assurée par l'action de l'embout E sur la bague 10 lorsque cet embout E est coiffé par la partie 3 du manchon tubulaire 1.

L'embout E est ici fileté extérieurement et pour coiffer cet embout E de manière démontable, le manchon 1 comporte dans sa zone 3 un taraudage intérieur 11. C'est donc en vissant le manchon 1 sur l'embout E que l'on provoque l'écrasement de la rondelle 4 entre les deux bagues 8 et 10, armant ainsi les éléments de connexion instantanée.

La zone axiale 2 du manchon 1 possède, au-delà de l'épaulement 9, un joint 12 d'étanchéité à lèvre qui assure l'étanchéité entre le manchon 1 et le tronçon T. La bague 10 possède quant à elle un joint frontal 13 qui assure l'étanchéité entre le manchon 1 et l'embout E. La liaison entre l'embout E et la canalisation T est donc rendue étanche.

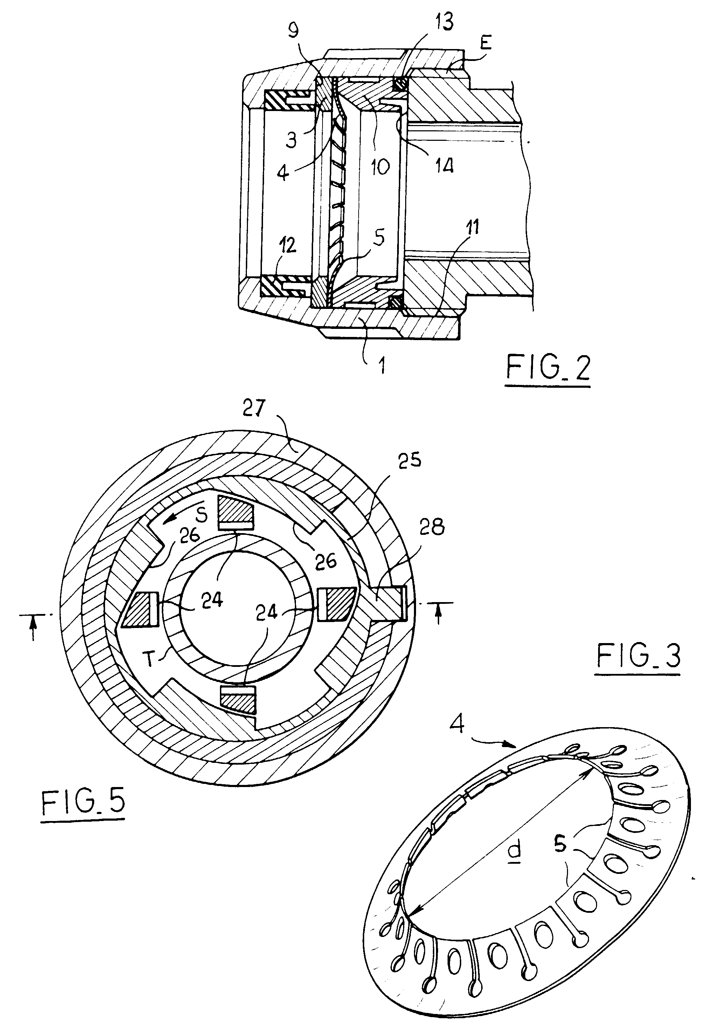

Il faut noter que la face frontale 14 de l'embout E constitue une butée à l'enfoncement dans le manchon 1 de l'extrémité du tronçon T lorsque l'embout E est vissé dans la zone 3 du manchon 1. On comprend que chaque organe ou appareil à raccorder à un tronçon de canalisation T, peut être pré-équipé d'un manchon 1 qui est vissé sur l'embout E de sorte que les éléments de connexion instantanée que ce manchon comporte sont armés comme illustré par la figure 2. La connexion d'un appareil ainsi pourvu à un tronçon T de canalisation est réalisée simplement en emboîtant le tronçon T dans le manchon 1, cet emboîtement étant arrêté par le contact entre la face d'extrémité 15 du tronçon T et la face frontale 14 de l'embout E. La forme de réalisation de certains des éléments de la figure 2, diffère un peu de celle des éléments portant les mêmes références représentés à la figure 1. C'est ainsi que la rondelle 4 (voir figure 3) au lieu d'être tronconique, peut être formée dans une portion de surface torique. A l'état libre son diamètre intérieur d est supérieur à celui extérieur du tronçon de tube T.

Ce n'est pas sortir du cadre de l'invention que de prévoir à la place d'une liaison filetée entre la zone 3 du manchon 1 et l'embout E, une autre liaison par exemple par emmanchement, qui serait maintenue au moyen d'un bridage extérieur entre des collerettes que comporterait en correspondance l'embout E et le manchon 1 (voir figure 4).

Pour démonter la connexion réalisée avec le dispositif de la figure 1, il suffit de dévisser le manchon pour le déconnecter de l'embout E. Ce dévissage donne de plus en plus de jeu à l'empilement serré 8, 4, 10 et la rondelle 4 à dents 5 peut ainsi retrouver sa forme initiale dans laquelle l'extrémité des dents 5 se trouve à l'extérieur du tronçon de tube T. Il est alors possible de faire coulisser le manchon 1 sur le tube T sans le rayer.

A la figure 4, on retrouve la plupart des éléments déjà décrits avec les mêmes références. Cette figure fait apparaître deux variantes de réalisation d'un dispositif de connexion conforme à l'invention, l'une concernant les moyens associés à la seconde partie axiale du manchon 1 pour coiffer de manière étanche et démontable l'embout E de raccordement, l'autre concernant les moyens de connexion instantanée logés dans la première partie axiale du manchon 1.

Ainsi, à cette figure, l'accouplement vissé entre l'embout E et le manchon 1 est remplacé par un collier d'attelage 16, par exemple en deux demi-parties articulées, dont la fermeture à cheval sur le manchon 1 et l'embout E permet, grâce à la coopération de surfaces coniques 17, 18 prévues respectivement sur le collier et à l'extérieur de l'embout, de maintenir fermement l'embout E à l'intérieur d'une portée cylindrique 19 de la seconde zone axiale 3 du manchon 1, pourvu d'un joint d'étanchéité 20, contre un épaulement 21 limitant axialement cette portée 19.

Les moyens de connexion instantanée mettent en oeuvre une pince 22 dont les bras axiaux 23 sont élastiques et terminés par des dents 24. La pointe des dents 24 est, au repos, située sur une circonférence de diamètre plus important que le diamètre extérieur du tube T. Ces dents peuvent être contraintes à pénétrer dans le tube T par le biais d'une bague 25 qui possède des surfaces de came 26 qui forment, lorsque l'on tourne la bague 25 dans le sens S positif sur la figure 5, un coin entre le manchon tubulaire 1 et les bras 23, ce coin forçant la pénétration de la dent 24 correspondante dans le tube T si celui-ci déjà en place dans l'embout, ou plaçant les dents 24 sur une circonférence de diamètre plus petit que celui extérieur du tube T, si bien que lorsqu'on enfile ce dernier dans le dispositif armé de la sorte, il force son passage entre les dents 24 qui peuvent se déformer élastiquement et s'arc-boutent sur la surface extérieure du tube T. La commande de la bague 25 peut s'opérer au moyen d'une bague de commande annulaire extérieure 27 qui coopère avec au moins une extension 28 de la bague 25 traversant la paroi tubulaire du manchon 1.

Par une rotation inverse de la bague 27 on relâche la pression des cames 26 sur les bras 23 qui, par leur élasticité propre, retrouvent leur position de repos libérant ainsi le tube T. On comprend que si l'on introduit le tube T avant d'avoir armé la pince 22, on évite de rayer la partie d'extrémité de ce tube qui doit coopérer avec le joint d'étanchéité 29. On garantit par là même une meilleure qualité à cette étanchéité 29.

D'autres variantes de réalisation peuvent être conçues sans sortir du cadre de l'invention. C'est ainsi que l'on peut imaginer la commande par l'intermédiaire d'un poussoir extérieur qui se visserait sur l'embout tubulaire 2 pour une surface de came conique venant coopérer sur l'arrière des bras de pince 23 pour agripper le tube, le dévissage de cette bague libérant ces bras pour leur permettre de retrouver leur état de repos. une rondelle 4 classique c'est-à-dire dont les dents 5 à l'état de repos peuvent mordre sur la surface extérieure du tronçon de tube T, ces dents pouvant être écartées par un dispositif de poussoir connu en lui-même. Dans ces conditions, le manchon, découplé de l'embout, peut également coulisser sur le tronçon T.

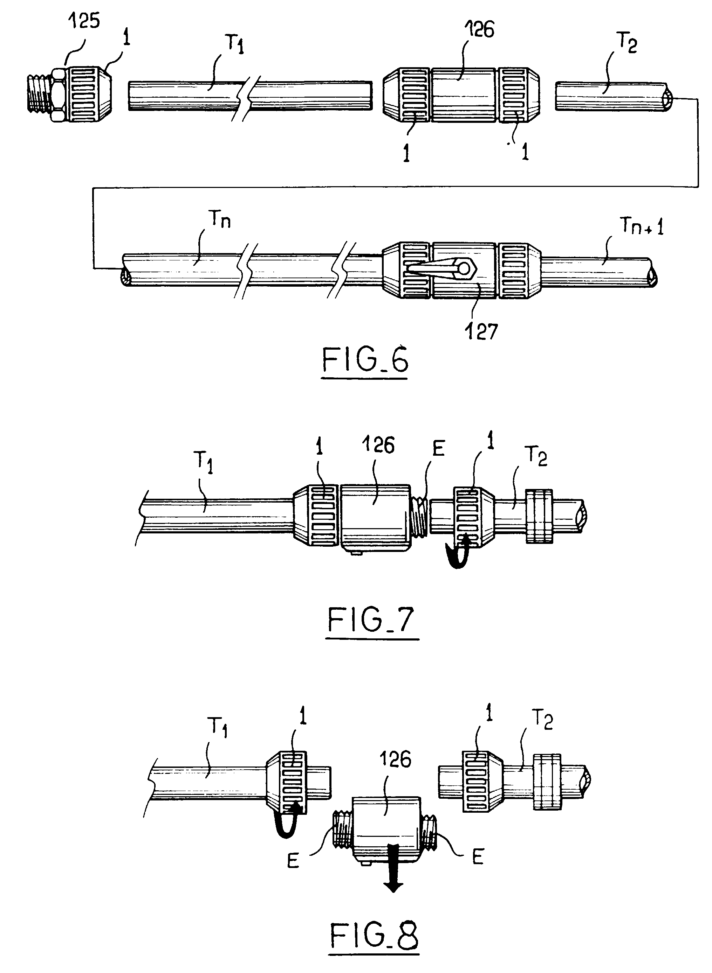

La figure 6, par une vue partielle, illustre la constitution d'un réseau de distribution de fluide comprimé conformément à l'invention. C'est ainsi que sur la gauche de la figure, un élément fonctionnel 125 est constitué par un piquage droit, fileté extérieurement. L'embout E de raccordement de cet élément fonctionnel est recouvert par un manchon 1 conforme à l'invention qui comporte d'une part un filetage pour se visser sur cet embout et d'autre les moyens de connexion instantanée pour recevoir une extrémité du tronçon T1 de canalisation. Le raccordement du tronçon T1 avec le tronçon successif T2 est assuré au moyen d'une union double 126 qui comporte à chacune de ses extrémités des embouts de raccordement sur lesquels sont pré-montés les manchons 1. La mise en place de cette union 126 est réalisée simplement en l'enfilant sur l'extrémité libre du tronçon T1 puis en enfilant l'extrémité du tronçon T2 dans le manchon coiffant son autre extrémité. De la même manière, le réseau comporte entre un tronçon Tn et un tronçon Tn+1, un élément fonctionnel 127 par exemple un robinet ou une vanne manuelle, raccordés à ces tronçons au moyen du dispositif de connexion de l'invention.

Les figures 7 et 8 illustrent comment, par exemple, il est aisé de déposer une union double telle que celle 126 de la figure 6. Il suffit en effet de dévisser chacun des manchon 1 des embouts E de cette union double et de faire coulisser ces manchons le long des tronçons T1 et T2 pour dégager complètement comme le montre la figure 8, l'élément fonctionnel 126. Il est alors possible de remplacer cette union double par tout élément fonctionnel qui comportera, comme l'union double, à la même place, deux embouts E sur lesquels on pourra venir revisser les manchons 1. Ce vissage provoquera en même temps, si ces manchons sont du type de réalisation illustré par la figure 1, l'armement des moyens de connexion instantanée des tronçons T1 et T2.

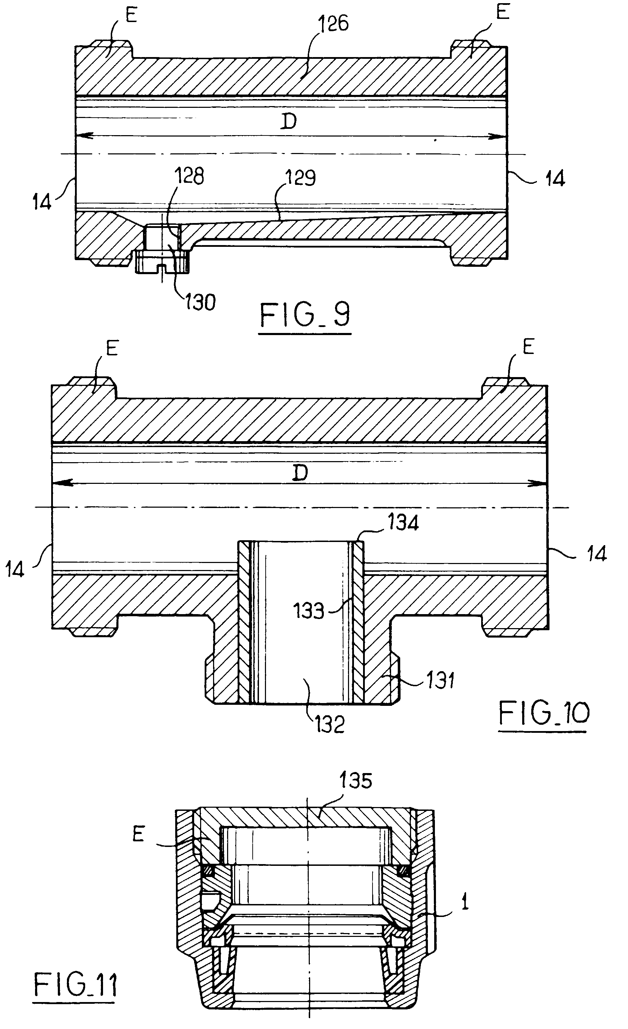

La figure 9 est une vue en coupe longitudinale d'une union double particulière qui possède entre les deux embouts E filetés extérieurement, un orifice 128 de purge situé au point bas d'une surface inférieure 129 de l'union double formant double pente. Cet orifice peut être fermé par un bouchon 130 ou par tout dispositif d'obturation à commande manuelle ou automatique, permettant la vidange de la canalisation, c'est-à-dire la purge de l'eau de condensation qu'elle peut contenir. Le diamètre intérieur de ce composant est bien entendu égal au diamètre intérieur des tronçons de canalisation qu'il relie pour en constituer une butée au montage et pour ne pas créer de perte de charge dans la canalisation.

La figure 10 illustre par une vue en coupe longitudinale un autre organe fonctionnel susceptible d'être utilisé dans un réseau construit conformément à l'invention. Il s'agit d'un T de raccordement comportant entre deux embout E un troisième embout 131 qui peut présenter un filetage extérieur pour son raccordement soit à l'appareil possédant un taraudage correspondant et dans ce cas il sera avantageux que le filetage extérieur soit normalisé, c'est-à-dire déterminé par le diamètre nominal de passage de l'orifice 132 qu'il entoure, soit pour recevoir la zone filetée 3 d'un manchon 1 appartenant au dispositif de connexion conforme à l'invention. On notera que pour éviter une descente d'eau de condensation présente dans les tronçons horizontaux d'un réseau de distribution dans la dérivation verticale qui peut être implantée sur ces tronçons horizontaux grâce à l'élément fonctionnel en T de la figure 10, on aura prévu que l'orifice 132 débouche dans le conduit principal du Té reliant les deux embout E au-dessus de la surface inférieure de ce conduit principal. Ce résultat peut être obtenu par tout moyen et notamment par la mise en place d'un insert 133 en forme de douille dont l'extrémité 134 intérieure au Té pénètre suffisamment pour toujours être située au-dessus du niveau d'eau pouvant stagner dans la canalisation horizontale supérieure du réseau de distribution.

L'orifice 132 peut, dans une variante, être délimité dans un insert taraudé à un diamètre normalisé permettant d'implanter n'importe quel piquage droit.

On remarquera que l'une des caractéristiques intéressantes de l'invention réside dans le fait que les faces terminales 114 des embouts opposés E de chaque organe fonctionnel mises en place dans un réseau, sont écartées l'une de l'autre d'une distance D unique pour tous les composants fonctionnels que ceux-ci soient des raccords-unions, des Tés, des vannes et robinets, ou tout autre dispositif.

La figure 11 illustre la liaison d'un manchon 1 conforme à l'invention avec un élément fonctionnel qui se réduit à un bouchon 135, c'est-à-dire une paroi radiale équipée d'un rebord cylindrique formant embout fileté E. La paroi radiale peut comporter des moyens non représentés pour son actionnement en vissage ou dévissage à l'intérieur du manchon 1.

Les éléments fonctionnels conformes à l'invention ne sont pas limités à ceux illustrés ci-dessus. Ils comprennent aussi par exemple des éléments qui possèdent un embout E de raccordement et à l'autre extrémité un filetage ou un taraudage normalisé pour permettre la connexion d'un composant classique.

On notera que le manchon 1, dans sa réalisation conforme à la figure 1, possède une surface extérieure cannelée qui permet sa manoeuvre manuelle.

On comprend de ce qui précède que le dispositif de connexion de l'invention, du fait même qu'il est déplaçable le long du tronçon de tube en ayant été dissocié de l'embout de l'appareil ou de l'organe disposé en ligne entre deux tronçons, permet de modifier rapidement la configuration d'un réseau existant. Il est notamment possible de concevoir un réseau à partir de tronçon de canalisation de longueurs déterminées qui constitue le pas minimum du réseau, l'endroit de chaque connexion constituant l'endroit de départ potentiel d'une dérivation de la ligne principale du réseau. De même, chaque ligne de dérivation peut être réalisée par aboutage de tronçons de longueurs déterminées formant également un pas qui détermine la modularité de la ligne de dérivation.

On comprend également que la conception de la connexion selon l'invention permet de mettre sur le marché un minimum d'éléments, sous forme de kit, pour la réalisation de réseaux de distribution de fluide sous pression à l'intérieur d'un local déterminé. On peut même imaginer la vente de modules qui comprendraient un tronçon déterminé de canalisation pourvu à ses deux extrémités du manchon 1 de raccordement, les composants de la connexion instantanée étant dans leur état désarmé. A l'inverse, on peut concevoir la commercialisation des constituants d'un réseau de distribution selon l'invention avec deux types de produits : les tronçons nus constituant le premier type tandis que les organes fonctionnels sont pré-équipés des manchons de connexion serrés ou attelés à leurs embouts, les composants de la connexion instantanée étant alors dans leur état armé.

## Revendications

1. Ligne de distribution de fluide sous pression comprenant au moins un tronçon (T) de canalisation, et au moins un élément (126) de raccordement de ces tronçons ou fonctionnel (127), caractérisée en ce que chaque élément fonctionnel (127) ou de raccordement (126) comporte au moins un embout (E), en ce que sa liaison au tronçon (T) de canalisation est assurée par un dispositif comportant un manchon tubulaire (1) divisé en deux parties (2,3) axialement successives, la première partie (2) étant équipée intérieurement des composants (4,12) d'un raccord à connexion instantanée pour l'extrémité du tronçon (T) de canalisation, la seconde partie (3) comportant des moyens (11,16,19) pour coiffer de manière étanche et démontable l'embout (E) de raccordement, et en ce que la face terminale (14) de l'embout (E) constitue une butée axiale à l'enfoncement du tronçon (T) dans le manchon tubulaire (1).

2. Ligne selon la revendication 1 caractérisée en ce que les moyens pour coiffer l'embout comportent un taraudage (11) de la seconde partie (3) du manchon pour coopérer avec un filetage extérieur de l'embout (E).

3. Ligne selon la revendication 1, caractérisée en ce que les composants du raccord à connexion instantanée comprennent des dents (5,24) de retenue de l'extrémité du tronçon (T) engagé dans la première partie (2) solidaires d'un support (4, 23) déformable entre un premier état "de repos" dans lequel les dents de retenue sont disposées totalement à l'extérieur d'une circonférence de diamètre égal à celui extérieur du tube (T) à retenir et un second état, "en service" dans lequel les dents (5, 24) de retenue s'étendent au moins partiellement à l'intérieur de cette circonférence, tandis que des moyens (8,10,25,26) de déformation du support (4,23) sont prévus pour le faire passer de son premier à son second état et pour le maintenir dans ce second état.

4. Ligne selon la revendication 3 caractérisée en ce que le support est constitué par une rondelle (4) équipée de dents (5) intérieures contenues dans une surface sensiblement tronconique, la base de ces dents étant rattachée à une couronne extérieure continue, qui est contenue dans une surface différente d'un plan radial, les moyens de déformation du support comportant deux surfaces radiales de pincement d'au moins la couronne extérieure de la rondelle (4), mobiles l'une par rapport à l'autre dans le sens axial à l'intérieur de l'embout (1).

5. Ligne selon la revendication 2 et la revendication 4, caractérisée en ce que l'une des surfaces radiales de pincement est formée par un épaulement radial (9) de la première partie, l'autre étant constituée par une face radiale d'une bague entretoise (10) en appui par son autre face radiale sur la face d'extrémité (14) de l'embout de raccordement.

6. Ligne selon la revendication 5, caractérisée en ce qu'elle comporte, entre la partie périphérique de la rondelle (4) et l'épaulement intérieur (9) de la première partie une autre bague entretoise (8).

7. Ligne selon la revendication 4, caractérisée en ce que la couronne extérieure de la rondelle est en forme de portion de tore.

8. Ligne selon la revendication 3, caractérisée en ce que le support est en forme de pince (22) dont les bras (23) sont orientés sensiblement axialement, les extrémités libres des bras (23) formant les dents (24) de retenue du tube, les moyens de déformation de la pince (22) comprenant des surfaces de came (26) coopérant avec la partie extérieure des bras (23) pour les faire passer les dents de leur premier vers leur deuxième état.

9. Ligne selon la revendication 1, caractérisée en ce que l'élément (126) de raccordement des tronçons comporte un corps tubulaire dont le diamètre intérieur est égal au diamètre intérieur de deux tronçons successifs à relier, les extrémités de cet élément étant d'épaisseur suffisante pour former un embout (E) fileté extérieurement d'un diamètre nominal supérieur au diamètre extérieur des tronçons (T) à relier.

10. Ligne selon la revendication 9, caractérisée en ce que l'élément (126) de raccordement des tronçons comporte sur sa face interne une surface inclinée (129) par rapport à l'axe pour aboutir à un orifice de purge (128) ménagé radialement dans la paroi et équipé d'un bouchon amovible (130).

11. Ligne selon la revendication 1, caractérisée en ce que l'élément fonctionnel (127) est du type vanne ou robinet et comporte deux embouts (E) pour sa liaison aux tronçons de canalisation dont le diamètre intérieur est égal au diamètre intérieur des tronçons à relier et dont l'épaisseur est suffisante pour posséder un filetage extérieur d'un diamètre nominal supérieur au diamètre extérieur des tronçons à relier.

12. Ligne selon la revendication 1, caractérisée en ce que l'élément fonctionnel est du type té de dérivation et comporte deux embouts (E) pour sa liaison aux tronçons de canalisation dont le diamètre intérieur est égal au diamètre intérieur des tronçons à relier et dont l'épaisseur est suffisante pour posséder un filetage extérieur d'un diamètre nominal supérieur au diamètre extérieur des tronçons à relier et un orifice de dérivation (132) entre les deux embouts (E), taraudé et/ou fileté (131) à un diamètre normalisé.

13. Ligne selon l'une quelconque des revendications 9 à 12 caractérisée en ce que l'élément fonctionnel (127) ou de raccordement (126) comporte deux embouts (E) opposés coaxiaux dont les faces terminales (14) sont distantes l'une de l'autre d'une valeur fixe (D) quel que soit l'élément.

## Patentansprüche

1. Verteilerleitung für Druckfluid, mit mindestens einem Leitungsrohrende (T) und mindestens einem Element (126) zum Verbinden der Rohrenden oder einem Funktionselement (127), dadurch **gekennzeichnet,** daß jedes Funktionselement (127) oder Verbindungselement (126) mindestens ein Ansatzstück (E) hat, daß seine Verbindung mit dem Leitungsrohrende (T) durch eine Vorrichtung gesichert ist, die eine in zwei axial aufeinanderfolgende Abschnitte (2, 3) unterteilte rohrförmige Muffe (1) umfaßt, wobei der erste Abschnitt (2) im Inneren Bestandteile (4, 12) eines Schnellkupplungsstückes für das Leitungsrohrende (T) hat und der zweite Abschnitt (3) Mittel (11, 16, 19) zum dichten und lösbaren Umfassen des Verbindungs-Ansatzstückes (E) hat, und daß die Endfläche (14) des Ansatzstückes (E) beim Hineintreiben des Rohrendes (T) in die rohrförmige Muffe (1) als axialer Anschlag dient.

2. Leitung nach Anspruch 1, dadurch **gekennzeichnet,** daß die Mittel zum Umfassen des Ansatzstückes ein Innengewinde (11) am zweiten Abschnitt (3) der Muffe haben, das mit einem Außengewinde des Ansatzstückes (E) zusammenwirkt.

3. Leitung nach Anspruch 1, dadurch **gekennzeichnet**, daß die Bestandteile des Schnellkupplunqsstückes Zacken (5, 24) umfassen, die das Rohrende (T), das mit dem ersten Abschnitt (2) in Eingriff steht, festhalten und die einstückig mit einer Halterung (4, 23) ausgebildet sind, die zwischen einem ersten "Ruhezustand", in dem die Haltezacken vollständig außerhalb eines Umfanges liegen, dessen Durchmesser gleich dem Außendurchmesser des festzuhaltenden Rohres (T) ist, und einem zweiten "Betriebszustand", in dem die Haltezacken (5, 24) zumindest teilweise ins Innere dieses Umfanges hineinreichen, verformbar ist, wobei Mittel (8, 10, 25, 26) zum Verformen der Halterung (4, 23) vorgesehen sind, um diese aus ihrem ersten Zustand in ihren zweiten Zustand zu versetzen und sie in diesem zweiten Zustand zu halten.

4. Leitung nach Anspruch 3, dadurch **gekennzeichnet,** daß die Halterung durch eine Scheibe (4) mit Innenzacken (5) gebildet ist, die in einer im wesentlichen kegelstumpfförmigen Fläche enthalten sind, wobei die Zacken mit ihrer Basis an einem durchgehenden Außenring angesetzt sind, der in einer Fläche enthalten ist, die von einer radialen Ebene verschieden ist, und wobei die Mittel zum Verformen der Halterung zwei radiale Klemmflächen zumindest zum Einklemmen des Außenringes der Scheibe (4) umfassen, die relativ zueinander in axialer Richtung im Inneren der Muffe (1) verschiebbar sind.

5. Leitung nach Anspruch 2 und Anspruch 4, dadurch **gekennzeichnet**, daß eine der radialen Klemmflächen durch eine radiale Schulter (9) des ersten Abschnittes und die andere durch eine radiale Fläche eines Abstandsringes (10) gebildet ist, der mit seiner anderen radialen Fläche an der Endfläche (14) des Verbindungs-Ansatzstückes anliegt.

6. Leitung nach Anspruch 5, dadurch **gekennzeichnet**, daß sie zwischen dem Randbereich der Scheibe (4) und der Innenschulter (9) des ersten Abschnittes einen weiteren Abstandsring (8) enthält.

7. Leitung nach Anspruch 4, dadurch **gekennzeichnet,** daß der Außenring der Scheibe die Form eines Torusabschnittes hat.

8. Leitung nach Anspruch 3, dadurch **gekennzeichnet,** daß die Halterung die Form einer Klemme (22) hat, deren Arme (23) im wesentlichen axial ausgerichtet sind, wobei am freien Ende der Arme (23) Zacken (24) zum Festhalten des Rohres ausgebildet sind, und wobei die Mittel zum Verformen der Klemme (22) Nockenflächen (26) umfassen, die mit der Außenseite der Arme (23) zusammenwirken, so daß diese die Zacken aus ihrem ersten Zustand in ihren zweiten Zustand verstellen.

9. Leitung nach Anspruch 1, dadurch **gekennzeichnet,** daß das Element (126) zum Verbinden der Rohrenden einen rohrförmigen Körper hat, dessen Innendurchmesser gleich dem Innendurchmesser zweier aufeinanderfolgender zu verbindender Rohrenden ist, wobei die Enden des Elementes eine ausreichende Dicke haben, um ein mit einem Außengewinde versehenes Ansatzstück (E) mit einem Nenndurchmesser zu bilden, der größer ist als der Außendurchmesser der zu verbindenden Rohrenden (T).

10. Leitung nach Anspruch 9, dadurch **gekennzeichnet,** daß das Element (126) zum Verbinden der Rohrenden an seiner Innenfläche eine gegenüber der Achse geneigte Fläche (129) hat, die zu einer Ablauföffnung (128) hinführt, die radial in der Wand angeordnet ist und einen lösbaren Verschluß (130) hat.

11. Leitung nach Anspruch 1, dadurch **gekennzeichnet,** daß das Funktionselement (127) vom Ventil- oder Hahntyp ist und zwei Ansatzstücke (E) zum Verbinden mit den Leitungsrohrenden hat, deren Innendurchmesser gleich dem Innendurchmesser der zu verbindenden Rohrenden ist und die eine ausreichende Dicke haben, um ein Außengewinde mit einem Nenndurchmesser zu besitzen, der größer ist als der Außendurchmesser der zu verbindenden Rohrenden.

12. Leitung nach Anspruch 1, dadurch **gekennzeichnet,** daß das Funktionselement vom Typ einer T-Abzweigung ist und zwei Ansatzstücke (E) zum Verbinden mit den Leitungsrohrenden hat, deren Innendurchmesser gleich dem Innendurchmesser der zu verbindenden Rohrenden ist und die eine ausreichende Dicke haben, um ein Außengewinde mit einem Nenndurchmesser zu besitzen, der größer ist als der Außendurchmesser der zu verbindenden Rohrenden, und daß das Funktionselement eine Umlenköffnung (132) zwischen den beiden Ansatzstücken (E) hat, die ein Innengewinde und/oder ein Außengewinde (131) mit normiertem Durchmesser aufweist.

13. Leitung nach einem der Ansprüche 9 bis 12, dadurch **gekennzeichnet,** daß das Funktionselement (127) bzw. das Verbindungselement (126) zwei koaxiale, einander gegenüberliegende Ansatzstücke (E) hat, deren Endflächen (14) unabhängig von der Art des Elementes einen festen Abstand (D) voneinander haben.

## Claims

1. A distribution line for fluid under pressure, including at least a length (T) of duct and at least a functional (127) or a length coupling (126) member, characterized in that each functional (127) or coupling (126) member includes at least an endpiece (E), and in that its connection to the length (T) is performed by means of a device including a tubular sleeve (1) comprising two portions (2, 3) in axial succession, the first portion (2) being fitted on its inside with components (4, 12) of an instant connection coupling for the end of the length (T) of duct, the second portion (3) including means (11, 16, 19) for releasably and sealably covering the coupling endpiece (E), and in that the end face (14) of the endpiece (E) constitutes an axial abutment for the end of the length (T) engaged in the first portion (2) of the sleeve, when the endpiece is covered by the sleeve (1).

2. A distribution line according to claim 1, characterized in that the means for covering the endpiece include tapping (11) in the second portion (3) of the sleeve to co-operate with an outside thread on the endpiece (E).

3. A distribution line according to claim 1, characterized in that the instant connection coupling components comprise teeth (5, 24) for retaining the end of the length (T) engaged in the first portion (2) and secured to a support (4, 23) which is deformable between a "rest", first state in which the retaining teeth are disposed completely outside a circumference of diameter equal to the outside diameter of the tube (T) to be retained, and a "in-use", second state in which the retaining teeth (5, 24) extend at least partially into said circumference, while means (8, 10, 25, 26) are provided for deforming the support (4, 23) to cause it to pass from its first state to its second state, and to hold it in said second state.

4. A distribution line according to claim 3, characterized in that the support is constituted by a washer (4) fitted with inside teeth (5) contained in a surface that is substantially frustoconical, the bases of the teeth being attached to a continuous outer ring which lies in a surface other than a radial plane, the means for deforming the support including two radial clamping surfaces for clamping at least the outer ring of the washer (4) and movable relative to each other in an axial direction inside the sleeve (1).

5. A distribution line according to claim 2 and claim 4, characterized in that one of the radial clamping surfaces is formed by a radial shoulder (9) on the first portion, the other being constituted by a radial face on a spacer ring (10) having its other radial face bearing against the end face (14) of the coupling endpiece.

6. A distribution line according to claim 5, characterized in that it includes another spacer ring (8) between the peripheral portion of the washer (4) and the inside shoulder (9) of the first portion.

7. A distribution line according to claim 4, characterized in that the outer ring of the washer is in the form of a portion of a torus.

8. A distribution line according to claim 3, characterized in that the support is in the form of a clamp (22) whose arms (23) extend substantially axially, the free ends of the arms (23) forming the tube-retaining teeth (24), the means for deforming the clamp (22) comprising camming surfaces (26) that co-operate with the outside portion of the arms (23) to cause them to move the teeth from their first state towards their second state.

9. A distribution line according to claim 1, characterized in that the coupling element (126) for lengths of duct includes a tubular element whose inside diameter is equal to the inside diameter of the lengths to be connected, the ends of said element being of sufficient thickness to form an endpiece (E) having an outside thread and a nominal diameter greater than the outside diameter of the lengths (T) to be connected.

10. A distribution line according to claim 9, characterized in that the coupling element (126) for length of duct includes an inclined surface (129) on its inside face, said surface being inclined relative to the axis so as to terminate at a bleed orifice (128) formed radially through the wall and fitted with a removable plug (130).

11. A distribution line according to claim 1, characterized in that the functional element (127) is of valve or faucet type and includes two endpieces (E) for connection to respective lengths of duct, having an inside diameter equal to the inside diameter of the lengths to be connected and of sufficient thickness to possess an outside thread having a nominal diameter greater than the outside diameter of the lengths to be connected.

12. A distribution line according to claim 1, characterized in that the functional element is of the T-branch type and includes two endpieces (E) for connection to respective lengths of duct, its inside diameter being equal to the inside diameter of the lengths to be connected and its thickness being sufficient to possess an outside thread having a nominal diameter greater than the outside diameter of the lengths to be connected, and also having a branch orifice (132) between the two endpieces (E), which branch orifice is tapped and/or threaded (131) to a standardized diameter.

13. A distribution line according to any one of the claims 9 to 12, characterized in that the functional element (127) or the coupling element (26) includes two opposite endpieces (E) in line, having end faces (14) that are spaced apart by the distance (D) regardless of the type of element.
